# EUROPÄISCHE PATENTANMELDUNG

(11) **EP 1 452 214 A2**
(43) Veröffentlichungstag der Anmeldung: **01.09.2004**
(21) Anmeldenummer: 03025285.2
(22) Anmeldetag: 06.11.2003
(51) Int. Cl.: A63F 13/12

(54) **Gerätesystem zur Realisierung von Spielen und/oder Diensten für Besucher von Massenveranstaltungen**

(30) Priorität: 29.11.2002 DE 10256140
(71) Anmelder: Deutsches Zentrum für Luft- und Raumfahrt e.V., 51147 Köln (DE)
(72) Erfinder: Angermann, Michael, 82166 Gräfelfing (DE); Fiebig, Uwe-Carsten, Dr., 82319 Starnberg (DE); Robertson, Patrick, Dr., 82541 Ammerland (DE)
(74) Vertreter: von Kirschbaum, Albrecht, Dipl.-Ing.

(57) **Zusammenfassung**

Das System zur Realisierung von Spielen und/oder Diensten für Besucher (2) von Massenveranstaltungen unter Einbeziehung einer großflächigen und den Ablauf der betreffenden Spiele und/oder Dienste anzeigenden Bilddarstellungsvorrichtung (5) mit Tonwiedergabeeinrichtung enthält einen zentralen Rechner (4)/Rechnergruppe (Rechner-Cluster) (4') und verschiedene damit vernetzte Peripheriegeräte, zu denen zumindest von den Besuchern mitgeführte Mobilfunkgeräte oder PDAs und die Bilddarstellungsvorrichtung gehören. Die Mobilfunkgeräte oder PDAs der Besucher sind über Funk- oder Infrarotverbindungen (3) an den zentralen Rechner/Rechnergruppe angebunden, der eine Kommunikationsschnittstelle zwischen einer Spiele-Logik und den Peripheriegeräten bildet und zur Verarbeitung der von den Besuchern in ihre Mobilfunkgeräte oder PDAs eingegebenen Eingabewerte, zur Realisierung einer Logik für den Ablauf und die Darstellung der betreffenden Spiele und/oder Dienste sowie zur Steuerung der Bilddarstellungsvorrichtung vorgesehen ist. Anwendungen liegen bei Betreibern von Großveranstaltungen in einem Stadion (1) und bei der Info- und Entertainment-Industrie.

## Beschreibung

Die Erfindung betrifft ein Gerätesystem zur Realisierung von Spielen und/oder Diensten für Besucher von Massenveranstaltungen unter Einbeziehung einer großflächigen, für die Besucher sichtbar angeordneten und den Ablauf der betreffenden Spiele und/oder Dienste anzeigenden Bilddarstellungsvorrichtung und einer Tonwiedergabeeinrichtung.

Im Rahmen von Massenveranstaltungen, also beispielsweise bei Sportereignissen wie Fußballspielen und Leichtathletikveranstaltungen oder bei Open-Air-Konzerten, ist es bekannt, durch einen Moderator bestimmte Gruppen der Besucher oder alle Besucher zu Aktionen aufzufordern, wobei eine großflächige Bilddarstellungsvorrichtung wie z.B. eine Videowand mit einer Tonwiedergabeeinrichtung zur Unterstützung eingesetzt werden kann. Direkte Interaktionen zwischen einzelnen Personen oder Personengruppen untereinander, wie sie bei den meisten Spielen oder auch bei vielen Diensten gebräuchlich sind, können allerdings durch die Besucher auf diese Weise bei Massenveranstaltungen nicht vorgenommen werden, so dass interaktive, ortsabhängige (z.B. Sitz-/Stehplatz oder Blocknummer abhängige) Spiele und Dienste und interaktives, ortsabhängiges Infotainment für Besucher einer Großveranstaltung derzeit nicht realisiert werden können.

Aus WO 01/41890 A2 ist ein Verfahren und System zur Übertragung von Sportinformationsdaten bekannt, bei dem ein Sport-Server eine Sport-Datenbank zum Speichern von Sportdaten enthält. Der Sport-Server kommuniziert mit einer Vielzahl verschiedener Eingabeeinrichtungen, um die Sportdaten zu empfangen. Der Sport-Server ermittelt die Art der Eingabeeinrichtung und kommuniziert dann mit dieser unter Benutzung geeigneter Anzeige- und Kommunikationsparameter. Der Sport-Server gibt dann die Sportdaten an verschiedene Ausgabeeinrichtungen, wie z.B. Mobiltelefone, Fernsehen, Nachrichtendienste oder Internet, unter Verwendung geeigneter Parameter für jede Ausgabeeinrichtung aus. Es handelt sich bei diesem bekannten Verfahren und System also um einen Ergebnisinformationsdienst, der aber keine Möglichkeit bietet, interaktive Spiele der Nutzer auszuüben.

Aus DE 101 05 247 A1 ist ein Werbetafelsystem mit einer großflächigen, stationären Fläche bekannt, auf der ein vorgegebenes Bild in einer Ansicht aus mindestens einer Betrachtungsrichtung sichtbar darstellbar ist. Dieses bekannte Werbetafelsystem weist zum einen eine Telekommunikationssendeeinrichtung zum Empfangen von Signalen aus einem Telekommunikationsnetz und zur Erzeugung eines Veränderungssignals auf ein Signal eines vorgegebenen Typs hin und zum anderen eine Einrichtung zum Verändern der Ansicht des Bildes auf, die auf ein Veränderungssignal der Telekommunikationssendeeinrichtung hin mindestens vorgegebene Teile der Ansicht des Bildes verändert. Es handelt sich somit bei diesem bekannten Werbetafelsystem darum, dass ein vorgegebenes Bild auf der großflächigen Darstellungsfläche in seiner Ansicht durch einen Betrachter beeinflusst werden kann. Auch hier besteht keinerlei Möglichkeit, interaktive Spiele zwischen Nutzern der Werbetafel auszuführen.

Aus WO 02/063915 A2 ist ein zum Gebrauch mit einer mobilen Kommunikationseinheit vorgesehenes System bekannt, das eine Diensteinrichtung enthält, die so ausgelegt ist, dass wenigstens ein Dienst ermittelt wird, der benutzt werden soll, um wenigstens eine der eingehenden und ausgehenden Nachrichten zu bzw. von den mobilen Kommunikationseinheiten zu beeinflussen. Die Diensteinrichtung ist so ausgelegt, dass wenigstens ein zu benutzender Dienst abhängig vom Ort der mobilen Kommunikationseinheit ermittelt wird. Ein mit der Diensteinrichtung verbundener Controller ist dafür vorgesehen, wenigstens den einen Dienst auszuführen, um zumindest eine der eingehenden und ausgehenden Nachrichten zu bzw. von der mobilen Kommunikationseinheit zu beeinflussen. Es handelt sich bei diesem bekannten System also darum, ortsbasierte Dienste für Nachrichten bei mobilen Kommunikationseinheiten zur Ausführung zu bringen. Auch hier besteht keinerlei Möglichkeit, bei Massenveranstaltungen interaktive Spiele zwischen Nutzern des Kommunikationssystems auszuführen.

Der Erfindung liegt die Aufgabe zu Grunde, für Besucher von Massenveranstaltungen unter Einbeziehung großflächiger Bilddarstellungsvorrichtungen und möglicherweise noch weiterer bei derartigen Großveranstaltungen einsetzbarer Einrichtungen, wie z.B. Spotbeams, Kameras, eine Möglichkeit zu schaffen, dass dort für sie interaktive, ortsabhängige Spiele und Dienste ausgeführt werden können, wobei bei den Besuchern nur ohnehin gebräuchliche Mittel zum Einsatz kommen sollen.

Gemäß der Erfindung, die sich auf ein System zur Realisierung von Spielen und/oder Diensten für Besucher von Massenveranstaltungen unter Einbeziehung einer großflächigen, für die Besucher sichtbar angeordneten und den Ablauf der betreffenden Spiele und/oder Dienste anzeigenden Bilddarstellungsvorrichtung und einer Tonwiedergabeeinrichtung bezieht, wird diese Aufgabe dadurch gelöst, dass ein zentraler Rechner oder eine Rechnergruppe (Rechner-Cluster) und als Peripheriegeräte die Bilddarstellungsvorrichtung sowie von den Besuchern mitgeführte Mobilfunkgeräte oder PDAs (Personal Digital Assistants) miteinander vernetzt sind, wobei die von den Besuchern mitgeführten Mobilfunkgeräte oder PDAs über Funk- oder Infrarotverbindungen an den zentralen Rechner bzw. die Rechnergruppe angebunden sind, und dass der zentrale Rechner bzw. die Rechnergruppe eine Kommunikationsschnittstelle zwischen einer Spiele-Logik und den Peripheriegeräten bildet und zur Verarbeitung der von den Besuchern in ihre Mobilfunkgeräte oder PDAs eingegebenen Eingabewerte, zur Realisierung einer Logik für den Ablauf und die Darstellung der betreffenden Spiele und/oder Dienste sowie zur Steuerung der großflächigen Bilddarstellungsvorrichtung vorgesehen ist.

Erst die erfindungsgemäße Vernetzung der Einzelkomponenten, nämlich
a) der Funk- bzw. Infrarotanbindung der Mobilfunkgeräte oder PDAs der Besucher,
b) des zentralen Rechners bzw. der Rechnergruppe und
c) der großflächigen Bilddarstellungsvorrichtung
ermöglicht interaktive Spiele und Dienste für die Besucher von Massenveranstaltungen.

Die Erfindung hat die Realisierung interaktiver, ortsabhängiger, wie Sitz-/Stehplatz oder Blocknummer abhängige Spiele und Dienste für Besucher von Großveranstaltungen, z.B. in einem Stadion, auf einer Festspielwiese, im Kino oder bei einem Open-Air, zum Gegenstand. Diese Spiele und Dienste werden durch die Vernetzung zumindest der drei vorher genannten Komponenten realisiert.

Vorteilhafte Weiterbildungen, zusätzliche Merkmale und Ausführungen des Systems nach der Erfindung sind in den sich auf den Patentanspruch 1 unmittelbar oder mittelbar rückbeziehenden Unteransprüchen angegeben.

Die Funkverbindung zwischen den von den Besuchern der Großveranstaltung mitgeführten Mobilfunkgeräten oder PDAs und dem zentralen Rechner bzw. der Rechnergruppe kann durch eine Funk-Kurzreichweitenkommunikationstechnik wie z.B. Bluetooth oder WLAN (Wireless Local Area Network) realisiert werden. Diese Funkverbindung zwischen den von den Besuchern mitgeführten Mobilfunkgeräten oder PDAs und dem zentralen Rechner bzw. der Rechnergruppe lässt sich auch durch zellularen Mobilfunk realisieren.

Der zentrale Rechner bzw. die funktional entsprechende Rechnergruppe (Rechner-Cluster) ist mit den Mobilfunkgeräten bzw. den PDAs der Besucher, mit der großflächigen Bilddarstellungsvorrichtung und optional weiteren Peripheriegeräten, z.B. Spotbeams, Kameras, Netzen der Außenwelt (TV, Internet, Rundfunk) oder anderen Multimedia-Geräten, verbunden. Dabei ist der zentrale Rechner bzw. die funktional entsprechende Rechnergruppe für mehrere Aufgaben verantwortlich.

Der zentrale Rechner bzw. die Rechnergruppe bildet eine Kommunikationsschnittstelle zwischen einer Spiele-Logik und den Peripheriegeräten, zu denen in jedem Fall die Mobilfunkgeräte und PDAs der Besucher der Großveranstaltung und die großflächige Bilddarstellungsvorrichtung mit Tonwiedergabeeinrichtung und gegebenenfalls z.B. Stadionkameras, Stadionbeleuchtung und Spotbeams gehören.

Ferner gehören zu den mit dem zentralen Rechner bzw. der Rechnergruppe vernetzten und davon gesteuerten Peripheriegeräten auch scharf bündelnde, wirkungsmäßig ausrichtbare Tonwiedergabeeinrichtungen.

Der zentrale Rechner bzw. die Rechnergruppe sorgt auch für die Verarbeitung der von den Besuchern über ihre Mobilfunkgeräte und PDAs eingegebenen Eingabewerte beispielsweise in Form einer statistischen Mittelung oder einer anderen mathematischen Operation von Eingabewerten von individuellen Menschen oder Gruppen von Menschen, in Form einer Identifikation von Besuchergruppen oder Individuen aufgrund ihrer Position, beispielsweise aufgrund ihres Platzes in einem Stadion, in Form einer Ermittlung des momentanen Aufenthaltsortes von Besuchern bei der Großveranstaltung oder in Form einer Identifikation aufgrund eines Eingabewerts oder der Eingabezeit, z.B. Eingabe der Platznummer(n) oder ähnlicher Angaben.

Der zentrale Rechner bzw. die Rechnergruppe zeichnet auch für die Realisierung der Ablauf- und Darstellungslogik ortsabhängiger, interaktiver Spiele und Dienste verantwortlich und sorgt für die Steuerung der großflächigen Bilddarstellungsvorrichtung und der Tonwiedergabeeinrichtung und optional von weiteren Peripheriegeräten, wie z.B. von Stadionkameras und Stadionbeleuchtung einschließlich Spotbeams.

Der zentrale Rechner bzw. die Rechnergruppe kann in optionaler Weise auch die Steuerung von Interaktionen mit anderen Rechnern in parallel dazu verlaufenden Veranstaltungen in anderen Stadien oder an anderen Orten, z.B. auf Innenstadt-Plätzen, betreiben. In optionaler Weise kann der zentrale Rechner bzw. die diesem funktional entsprechende Rechnergruppe auch eine Schnittstelle zu einem gegebenenfalls interaktiven Fernsehen, zu Internet-Portalen, zu einem gegebenenfalls interaktiven Rundfunk oder zu anderen Multimedia-Geräten bilden.

Der zentrale Rechner bzw. die diesem funktional entsprechende Rechnergruppe kann auch eine Schnittstelle zu einer Moderationseingabe- und Moderationssteuerungseinrichtung aufweisen, über welche ein oder mehrere Moderatoren, wie beispielsweise Showmaster, Stadionsprecher, Spielkoordinator(en) eingreifen können, d.h. diese Personen steuern und konfigurieren dann das System.

Hat der Rechner bzw. die entsprechende Rechnergruppe eine Schnittstellenanbindung an ein interaktives Fernsehen oder an ein anderes der vorstehend angegebenen Netze der Außenwelt, so können auch Fernsehteilnehmer und andere Teilnehmer eingebunden werden.

Die großflächige Bilddarstellungsvorrichtung, die z.B. durch eine Leinwand mit Projektionsapparat, einen Großbildschirm oder ein Groß-Videodisplay gegebenenfalls jeweils mit Tonwiedergabeeinrichtung, realisiert sein kann und die für die meisten der Besucher ohne Einschränkungen sichtbar sein sollte, stellt den Ablauf von Spielen und/oder Diensten und ihre Ergebnisse dar und präsentiert beispielsweise Gewinner oder andere Personen oder Personengruppen bzw. kommt mit diesen über die Tonwiedergabeeinrichtung akustisch in Kontakt.

In vorteilhafter Weise sind sehr kleine Funkzellen zur Funkanbindung der von den Besuchern mitgeführten Mobilfunkgeräten oder PDAs vorgesehen, so dass eine sehr genaue Positionierung und Ortung der Besucher möglich wird. Die kleinen Funkzellen können vorzugsweise mittels Bluetooth, aber unter Umständen auch durch WLAN oder zellularen Mobilfunk realisiert werden.

Zusätzlich kann in vorteilhafter Weise zur genauen Positionierung und Ortung der Besucher noch ein Satellitennavigationssystem wie z.B. GPS (Global Positioning System) oder Galileo miteingesetzt werden.

In optionaler Weise kann der zentrale Rechner bzw. die Rechnergruppe auch mit Schnittstellen zu anderen Stadien und Plätzen ausgestattet sein, an denen zur gleichen Zeit Großveranstaltungen stattfinden, deren Besucher für gemeinsame Spiele und Dienste zusammengeschaltet werden können.

An dieser Stelle wird noch angemerkt, dass zwar verschiedene beim System nach der Erfindung eingesetzte Einzelkomponenten, wie z.B. Großbildschirme, Spotbeams, PDAs, Bluetooth und Kameras, heute bereits in Gebrauch sind. Die derzeitigen Einzelkomponenten erlaubten aber keine Interaktion untereinander, so dass interaktive, ortsabhängige Spiele und Dienste und interaktives, ortsabhängiges Infotainment für Besucher einer Großveranstaltung bis heute noch nicht realisiert werden konnten.

Für neue Spiele und Dienste, die sich über das System nach der Erfindung ausführen lassen, lassen sich folgende Merkmale und Möglichkeiten angeben.

Es können Zwei- oder Mehrparteienspiele wie z.B. Tischfußball oder Tennis realisiert werden, wobei die Position von Schlägern oder anderen Körpern, die den Ball spielen, durch geeignete Verarbeitung der Eingabewerte aller Besucher oder eines Teiles der Besucher bestimmt wird, z.B. durch statistische Mittelwertbildung in einem Besucherblock oder Auswählen eines Repräsentanten aus einem Besucherblock. Es können beispielsweise zwei Parteien aus den Fanblocks gegnerischer Mannschaften gebildet werden, wobei die Eingabewerte aller teilnehmenden Besucher statistisch gemittelt werden.

Die Sieger eines Spieles oder einzelne Spieler im Falle der Auswahl dieser Spieler anstelle von Fanblocks können durch eine Zoom-Kamera lokalisiert werden und auf der großflächigen Bilddarstellungsvorrichtung, also z.B. auf einer Leinwand, gezeigt und gegebenenfalls zusätzlich über die Tonwiedergabeeinrichtung angesprochen werden.

In Verbindung mit dem System nach der Erfindung kann gemäß einem zusätzlichen Merkmal ein Suchdienst im Rahmen einer Massenveranstaltung ausgeführt werden. Sucht ein Besucher seinen Platz in einem Stadion, so wird dieser Platz nach einer mit seinem Mobilfunkgerät oder PDA ausgelösten Aufforderung des Besuchers angeleuchtet. Sucht ein Besucher einen anderen Besucher bei einer Großveranstaltung, so kann der Gesuchte über sein Mobilfunkgerät oder seinen PDA lokalisiert und danach durch einen Spotbeam angestrahlt werden.

Es lässt sich mit dem System nach der Erfindung auch ein den Internet-Zugang betreffendes zusätzliches Merkmal realisieren. Besucher einer Massenveranstaltung können mittels der Funkanbindung und der Schnittstelle im zentralen Rechner bzw. in der Rechnergruppe mit Zugang zu Internet-Portalen auf Dienste des Internets zugreifen.

Mit dem System nach der Erfindung lässt sich ein eine Besucher-Heraushebung betreffendes zusätzliches Merkmal realisieren. Der/die Gewinner von Spielen/Lotterien wird/werden von rechnergesteuerten Spotbeams angestrahlt und auf der großflächigen Bilddarstellungsvorrichtung angezeigt, z.B. auf eine Großleinwand projiziert und gegebenenfalls mittels der Tonwiedergabeeinrichtung angesprochen. Für besondere Anlässe, z.B. Geburtstage, Ehrungen oder Jubiläen, können Besucher Spotbeams auf sich oder bestimmte Besuchergruppen richten lassen und optional sich oder diese Besuchergruppen auf der großflächigen Bilddarstellungsvorrichtung zeigen und u.U. ansprechen lassen.

Ein zusätzliches Merkmal für Spiele, die auf einer Abstimmung ("Voting") beruhen, besteht darin, dass alle Besucher an Umfragen, z.B. nach dem "besten Spieler" oder dem "schönsten Tor" teilnehmen.

Ein Merkmal für eine mögliche Steuerung mechanischer Gegenstände bei einer Massenveranstaltung, besteht darin, dass diese mechanischen Gegenstände von Besuchern mit ihren Mobilfunkgeräten oder PDAs per Funk oder Infrarot über den zentralen Rechner bzw. die entsprechende Rechnergruppe gesteuert werden. Bei den mechanischen Gegenständen kann es sich hierbei um Roboter handeln, die sich auf der Bahn oder auf dem Spielfeld eines Stadions bewegen.

Ein einfaches und vorteilhaftes Ausführungsbeispiel eines Systems nach der Erfindung wird nachfolgend anhand einer beigefügten Figur erläutert.

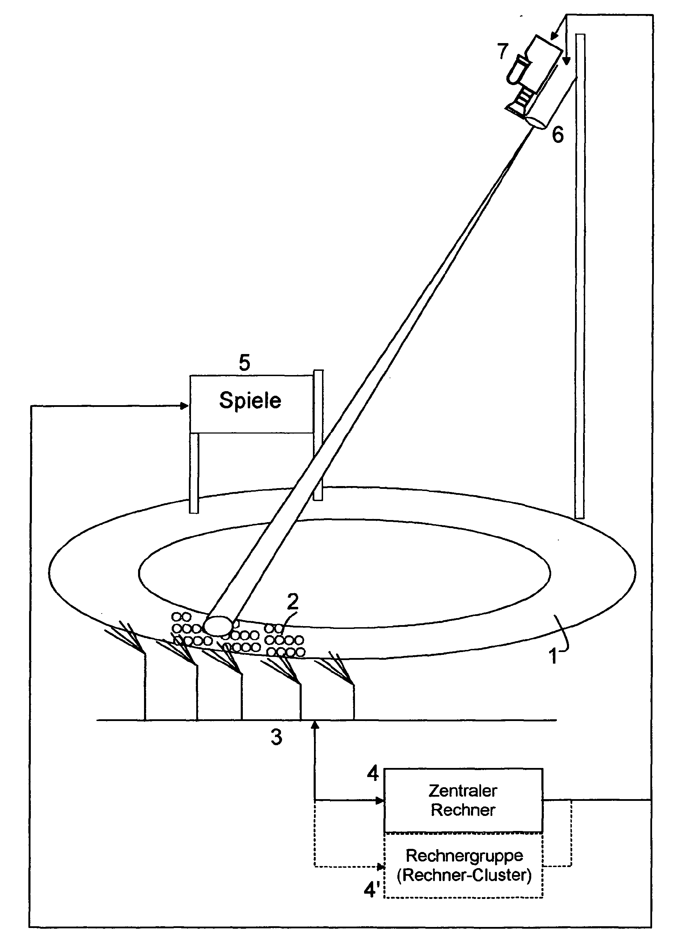

Die Figur verdeutlicht die Realisierung des Systems nach der Erfindung für eine Anwendung in einem Stadion 1, auf dessen umlaufenden Rängen sich als Publikum während einer Massenveranstaltung, z.B. während einer Open-Air-Veranstaltung oder einem Fußballspiel, eine Vielzahl von Besuchern 2 befindet. Sämtliche beteiligten Besucher 2 haben mit jeweils einem von ihnen mitgeführten Mobilfunkgerät oder PDA per Bluetooth-Zugang eine Funkanbindung 3 zu einem zentralen Rechner 4 oder alternativ dazu zu einer Rechnergruppe (Rechner-Cluster) 4'. Bluetooth-Sendeempfänger können in den Sitzschalen auf den Rängen des Stadions 1 integriert sein, wobei - je nach Besucherdichte bzw. Funkkapazität - etwa jede zehnte Sitzschale mit einem Bluetooth-Sendeempfänger ausgestattet ist. Der zentrale Rechner 4 bzw. die Rechnergruppe 4' verwertet die über die Bluetooth-Sendeempfänger eingegebenen Eingabewerte der Besucher 2 und setzt sie für ortsabhängige Infotainment-Dienste um, wobei der zentrale Rechner 4 bzw. die Rechnergruppe 4' auch die Steuerung der Anzeige auf einer großflächigen Bilddarstellungsvorrichtung 5 mit Tonwiedergabeeinrichtung gegebenenfals mit Richtwirkung, z.B. auf einer Großleinwand oder auf einem Bildschirm, und einer Stadionbeleuchtung 6 im dargestellten Fall in Form von Spotbeams sowie einer Kamera 7 übernimmt.

Das System nach der Erfindung ist von besonderem Interesse für Betreiber von Großveranstaltungen, wie z.B. von Fußballund Leichtathletik-Sportereignissen und Open-Air-Konzerten, sowie für die Info- und Entertainment-Industrie.

### Bezugszeichenliste

- 1: Stadion
- 2: Besucher
- 3: Funkanbindung
- 4: Zentraler Rechner
- 4': Rechnergruppe (Rechner-Cluster)
- 5: Großflächige Bilddarstellungsvorrichtung
- 6: Stadionbeleuchtung, Spotbeam
- 7: Kamera

## Patentansprüche

1. Gerätesystem zur Realisierung von Spielen und/oder Diensten für Besucher von Massenveranstaltungen unter Einbeziehung einer großflächigen, für die Besucher sichtbar angeordneten und den Ablauf der betreffenden Spiele und/oder Dienste anzeigenden Bilddarstellungsvorrichtung und einer Tonwiedergabeeinrichtung, **dadurch gekennzeichnet, dass** ein zentraler Rechner (4) oder eine Rechnergruppe (Rechner-Cluster) (4') und als Peripheriegeräte die Bilddarstellungsvorrichtung sowie von den Besuchern (2) mitgeführte Mobilfunkgeräte oder PDAs (Personal Digital Assistants) miteinander vernetzt sind, wobei die von den Besuchern mitgeführten Mobilfunkgeräte oder PDAs über Funk- oder Infrarotverbindungen (3) an den zentralen Rechner bzw. die Rechnergruppe angebunden sind, und dass der zentrale Rechner bzw. die Rechnergruppe eine Kommunikationsschnittstelle zwischen einer Spiele-Logik und den Peripheriegeräten bildet und zur Verarbeitung der von den Besuchern in ihre Mobilfunkgeräte oder PDAs eingegebenen Eingabewerte, zur Realisierung einer Logik für den Ablauf und die Darstellung der betreffenden Spiele und/oder Dienste sowie zur Steuerung der großflächigen Bilddarstellungsvorrichtung (5) vorgesehen ist.

2. Gerätesystem nach Anspruch 1, **dadurch gekennzeichnet, dass** die Funkverbindung (3) zwischen den von den Besuchern (2) mitgeführten Mobilfunkgeräten oder PDAs und dem zentralen Rechner (4) bzw. der Rechnergruppe (4') durch eine Funk-Kurzreichweitenkommunikationstechnik wie z.B. Bluetooth oder WLAN (Wireless Local Area Network) realisiert ist.

3. Gerätesystem nach Anspruch 1, **dadurch gekennzeichnet, dass** die Funkverbindung (3) zwischen den von den Besuchern (2) mitgeführten Mobilfunkgeräten oder PDAs und dem zentralen Rechner (4) bzw. der Rechnergruppe (4') durch zellularen Mobilfunk realisiert ist.

4. Gerätesystem nach Anspruch 2 oder 3, **dadurch gekennzeichnet, dass** sehr kleine Funkzellen zur Funkanbindung (3) der von den Besuchern (2) mitgeführten Mobilfunkgerät oder PDAs vorgesehen sind, so dass eine sehr genaue Positionierung und Ortung der Besucher möglich ist.

5. Gerätesystem nach Anspruch 4, **dadurch gekennzeichnet, dass** zusätzlich zur genauen Positionierung und Ortung der Besucher (2) ein Satellitennavigationssystem wie z.B. GPS (Global Positioning System) oder Galileo Navigation eingesetzt ist.

6. Gerätesystem nach Anspruch 1, **dadurch gekennzeichnet, dass** als weitere Peripheriegeräte, die mit dem zentralen Rechner (4) bzw. der Rechnergruppe (4') vernetzt und davon gesteuert sind, Beleuchtungseinrichtungen (6), z.B. Spotbeams und Kameras (7) vorgesehen sind.

7. Gerätesystem nach Anspruch 1, **dadurch gekennzeichnet, dass** als weitere Peripheriegeräte, die mit dem zentralen Rechner (4) bzw. der Rechnergruppe (4') vernetzt und davon gesteuert sind, scharf bündelnde, wirkungsmäßig ausrichtbare Tonwiedergabeeinrichtungen vorgesehen sind.

8. Gerätesystem nach Anspruch 1, **gekennzeichnet durch** eine im zentralen Rechner (4) bzw. in der Rechnergruppe (4') vorgesehene statistische Mittelung oder eine andere mathematische Operation der von individuellen Besuchern (2) oder Gruppen von Besuchern in ihre Mobilfunkgeräte oder PDAs eingegebenen und dann zum zentralen Rechner bzw. zu der Rechnergruppe übertragenen Eingabewerte.

9. Gerätesystem nach Anspruch 1, **gekennzeichnet durch** eine im zentralen Rechner (4) bzw. in der Rechnergruppe (4') vorgesehene Verarbeitung der von den Besuchern (2) in ihre Mobilfunkgeräte oder PDAs eingegebenen und dann zum zentralen Rechner bzw. zu der Rechnergruppe übertragenen Eingabewerte zur Identifikation von Besuchergruppen oder von individuellen Besuchern auf Grund deren räumlichen Position bei der Massenveranstaltung.

10. Gerätesystem nach Anspruch 1, **gekennzeichnet durch** eine im zentralen Rechner (4) bzw. in der Rechnergruppe (4') vorgesehene Verarbeitung der von den Besuchern (2) in ihre Mobilfunkgeräte oder PDAs eingegebenen und dann zum zentralen Rechner bzw. zu der Rechnergruppe übertragenen Eingabewerte zur Ermittlung des Orts von Besuchern.

11. Gerätesystem nach einem der vorhergehenden Ansprüche, **gekennzeichnet durch** eine im zentralen Rechner (4) bzw. in der Rechnergruppe (4') vorgesehene Steuerung von Interaktionen mit anderen Rechnern in einer oder mehreren parallel dazu laufenden Veranstaltungen an anderen Orten.

12. Gerätesystem nach einem der vorhergehenden Ansprüche, **gekennzeichnet durch** eine im zentralen Rechner (4) bzw. in der Rechnergruppe (4') vorgesehene Schnittstelle zu gegebenenfalls interaktivem Fernsehen, zu Internet-Portalen, zu gegebenenfalls interaktivem Rundfunk, zu einer Moderationseingabe- und Moderationssteuerungseinrichtung oder zu anderen Multimedia-Einrichtungen.

13. Gerätesystem nach Anspruch 1, **dadurch gekennzeichnet, dass** die großflächige Bilddarstellungsvorrichtung (5) eine Großleinwand mit Projektionsapparat, ein Großbildschirm oder ein Groß-Videodisplay ist.

14. Gerätesystem nach einem der vorhergehenden Ansprüche, **dadurch gekennzeichnet, dass** Zwei- oder Mehrparteienspiele wie Tischfußball, Tennis oder dergleichen realisiert sind, indem die Position von Schlägern oder anderen Körpern, die den Ball spielen, durch eine geeignete, im zentralen Rechner (4) bzw. in der Rechnergruppe (4') vorgesehene Verarbeitung der Eingabewerte aller oder eines Teiles der Besucher bestimmt wird, z.B. durch statistische Mittelwertbildung in einem Besucherblock oder durch Auswählen eines Repräsentanten aus diesem Besucherblock.

15. Gerätesystem nach einem der vorhergehenden Ansprüche, **gekennzeichnet durch** eine Ausrichtung einer als Zoom-Kamera realisierten Kamera (7) und möglicherweise einer als Spotbeam realisierten Beleuchtungseinrichtung (6) auf eine oder mehrere **durch** den zentralen Rechner (4) bzw. die Rechnergruppe (4') ermittelte und hinsichtlich ihres Aufenthaltsortes lokalisierte Personen, z.B. Sieger eines Spieles, Gewinner einer Lotterie oder andere hervorgehobene Personen, und **durch** eine Anzeige dieser Person/en auf der großflächigen Bilddarstellungsvorrichtung (5).

16. Gerätesystem nach einem der Ansprüche 1 bis 13, **dadurch gekennzeichnet, dass** zur Realisierung eines Suchdienstes, bei dem einer der Besucher (2) seinen Platz oder einen anderen Besucher sucht, der gesuchte Platz bzw. der gesuchte, über sein Mobilfunkgerät bzw. seinen PDA lokalisierbare Besucher durch Aufforderung des suchenden Besuchers durch Beleuchtungseinrichtung (6) in Form von Spotbeams angeleuchtet ist.

17. Gerätesystem nach Anspruch 11, **gekennzeichnet durch** einen Zugriff der Besucher (2) auf Dienste des Internets mittels ihrer Funk- oder Infrarotanbindung (3) an den zentralen Rechner (4) bzw. die Rechnergruppe (4') und damit an die dort vorgesehene Schnittstelle zu den Internet-Portalen.

18. Gerätesystem nach einem der Ansprüche 1 bis 13, **gekennzeichnet durch** den Einsatz bei solchen Spielen, die auf einer Abstimmung oder Umfrage bei den jeweils mit einem Mobilfunkgerät oder PDA ausgerüsteten Besuchern (2) der Massenveranstaltung beruhen.

19. Gerätesystem nach einem der Ansprüche 1 bis 13, **gekennzeichnet durch** eine Steuerung von mechanischen Gegenständen, z.B. Robotern, in der Weise, dass diese von jeweils mit einem Mobilfunkgerät oder PDA ausgerüsteten Besuchern (2) der Massenveranstaltung per Funk- oder Infrarotverbindung über den zentralen Rechner (4) bzw. die Rechnergruppe (4') gesteuert werden.
